# EUROPÄISCHE PATENTANMELDUNG

(11) **EP 1 113 306 A2**
(43) Veröffentlichungstag der Anmeldung: **04.07.2001**
(21) Anmeldenummer: 00126255.9
(22) Anmeldetag: 01.12.2000
(51) Int. Cl.: G02B 27/10, G02B 27/28, G02B 23/04, H04N 5/225

(54) **Sensoranordnung für Licht unterschiedlicher Farbe und/oder Polarisation**

(30) Priorität: 29.12.1999 DE 19963658
(71) Anmelder: Bodenseewerk Gerätetechnik GmbH, 88662 Überlingen (DE)
(72) Erfinder: Tholl, Hans D., 88690 Uhldingen (DE)
(74) Vertreter: Weisse, Jürgen, Dipl.-Phys.

(57) **Zusammenfassung**

Eine Sensoranordnung mit einem bildauflösenden Detektor, bei welcher die Abbildung der Objektszene auf dem Detektor nacheinander mit Licht unterschiedlicher Farbe und/oder Polarisation erfolgt ist zur Erzeugung quasi-zeitsynchroner Bilder folgendermaßen aufgebaut: Die Abbildungsmittel weisen ein erstes abbildendes optisches System (12) auf, durch welches die Objektszene in einem Bildbereich (32) einer Zwischenbildebene abbildbar ist. Die Abbildungsmittel weisen weiterhin ein zweites abbildendes optisches System (40) auf, durch welches der Bildbereich (32) der Zwischenbildebene auf den bildauflösenden Detektor (42) abbildbar ist. Die Pupille des ersten abbildenden Systems ist in Pupillenbereiche (24,26,28,30) unterteilt, wobei in den verschiedenen Pupillenbereichen (24,26,28,30) unterschiedliche Farb- oder Polarisationsfilter angeordnet sind. In dem Bildbereich (32) ist ein strahlenablenkendes, mikrooptisches Strahlenablenk-Element (36) angeordnet. Das mikrooptische Strahlenablenk-Element (36) ist so ansteuerbar, daß es nacheinander Strahlung aus den verschiedenen Pupillenbereichen (24,26,28,30) auf das zweite abbildende optische System (40) lenkt.

## Beschreibung

Die Erfindung betrifft eine Sensoranordnung mit einem bildauflösenden Detektor und Äbbildungsmitteln, durch welche eine Objektszene auf den bildauflösenden Detektor abbildbar ist, wobei Filtermittel im Strahlengang vorgesehen sind, durch welche die Abbildung der Objektszene auf dem Detektor nacheinander mit Licht unterschiedlicher Farbe und/oder Polarisation erfolgt.

Für manche zivilen und militärischen Anwendungen von bildauflösenden Sensoren ist es wünschenswert, eine Objektszene mit einer Sensoranordnung in unterschiedlichen Spektralbändern (Farben) oder mit unterschiedlichen Polarisationszuständen zu betrachten und zu analysieren. Im militärischen Bereich ist eine Anwendung die Schätzung der radiometrischen Temperatur eines Ziels. Eine andere Anwendung ist die Zielklassifikation oder die Erkennung eines Ziels vor einem stark strukturierten Hintergrund.

Zur Beobachtung einer Objektszene in mehreren Spektralbereichen oder Polarisationszuständen ist es bekannt, die empfangene Strahlung über dichroitische bzw. polarisationsempfindliche Strahlenteiler in zwei Bündel zu teilen, von denen eines eine Farbe und das andere eine andere Farbe bzw. den einen oder anderen reinen Polarisationszustand hat. Durch jedes dieser Bündel wird die Objektszene auf einem zugehörigen Detektor abgebildet. Diese Anordnung ist aufwendig. Es müssen mehrere Detektoren vorgesehen werden. Die Detektoren werden insbesondere beim Arbeiten im Infraroten gekühlt. Zu jedem Detektor ist eine Elektronik erforderlich. Jedem Detektor ist ein abbildendes optisches System zugeordnet. Diese optischen Systeme müssen montiert und justiert werden. Es ergibt sich ein erhebliches Bauvolumen.

Eine andere Einrichtung zur Beobachtung einer Objektszene in mehreren Spektralbereichen oder Polarisationszuständen enthält ein abbildendes optisches System, durch welches die Objektszene auf einen bildauflösenden Detektor abgebildet wird. Durch ein Filterrad werden nacheinander verschiedene Farb- oder Polarisationsfilter in die Eintrittspupille des abbildenden optischen Systems gedreht. Dabei ist der Wechsel zwischen den verschiedenen Farben oder Polarisationszuständen für viele Anwendungen zu langsam. Für viele Anwendungen ist eine praktisch zeitsynchrone Beobachtung der Objektszene in den verschiedenen Farben oder Polarisationszuständen erforderlich. Das gilt insbesondere dann, wenn sich die Objektszene z.B. durch ein schnell bewegtes Ziel sehr schnell verändert. Dann liegen einander entsprechende Punkte des Ziels in den verschiedenfarbigen Bildern an unterschiedlichen Stellen.

Es sind weiterhin Detektor-Mosaike bekannt, mit denen sich simultan ein Bild in zwei Farbbereichen aufnehmen läßt. Dabei sitzen auf einem Halbleiterchip rasterartig ineinandergeschachtelt einmal Detektorelemente, die in einem ersten Farbbereich empfindlich sind, und zum anderen Detektorelemente, die in einem zweiten Farbbereich empfindlich sind. Da die Fläche des Halbleiterchips begrenzt ist, wird die zusätzliche Farbinformation mit einer Verringerung der Auflösung erkauft.

Die EP 0 905 539 A2 beschreibt eine Einrichtung zur Erfassung mehrerer Gesichtsfelder mittels eines bildauflösenden Detektors. Zu diesem Zweck ist ein erstes abbildendes optisches System vorgesehen, in dessen Pupille eine Mehrzahl von Pupillenbereichen gebildet ist. Jeder dieser Pupillenbereiche bildet ein Teilgesichtsfeld auf einen gemeinsamen Bildbereich in einer Zwischenbildebene ab, so daß also die verschiedenen Teilgesichtsfelder überlagert auf den gemeinsamen Bildbereich abgebildet werden. Das geschieht z.B. durch eine Prismenstruktur vor der Pupille des ersten abbildenden Systems. Durch ein zweites abbildendes optisches System wird der gemeinsame Bildbereich auf einen bildauflösenden Detektor abgebildet. In der Zwischenbildebene sitzt ein strahlablenkendes, mikrooptisches Strahlablenk-Element, z.B. ein mikromechanisches Spiegelraster. Dieses mikromechanische Strahlablenk-Element ist so ansteuerbar, daß es nacheinander Strahlung aus den verschiedenen Pupillenbereichen auf das zweite abbildende optische System lenkt. Durch die Bewegung des strahlablenkenden, mikrooptischen Strahlablenk-Elementes wird zwischen den verschiedenen Pupillenbereichen und damit auch zwischen den verschiedenen Teilgesichtsfeldern umgeschaltet. Die so nacheinander am Detektor erhaltenen Bilder der Teilgesichtsfelder werden ausgelesen und gespeichert und zu einem größeren "elektronischen Bild" zusammengesetzt.

Eine anderes schaltbares, mikrooptisches Strahlumlenk-Element ist in der DE-197 49 799 A1 beschrieben. Dieses Strahlenumlenk-Element enthält ein Paar von hintereinander im Strahlengang angeordneten gegeneinander quer zur Strahlenrichtung verschiebbaren mikrooptischen Linsenrastern. Diese Linsenraster sind wie bei der EP 0 905 539 A2 im wesentlichen in einer Zwischenbildebene angeordnet.

Der Erfindung liegt die Aufgabe zugrunde, eine Sensoranordnung der eingangs genannten Art so auszubilden, daß Bilder in verschiedenen Spektralbereichen oder in verschiedenen Polarisationszuständen nacheinander an einem einzigen bildauflösenden Detektor hoher Auflösung in so schneller Folge erscheinen, so daß eine praktisch zeitsynchrone Beobachtung der Objektszene in den verschiedenen Spektralbereichen oder Polarisationszuständen möglich ist.

Erfindungsgemäß wird diese Aufgabe dadurch gelöst, daß
(a) die Abbildungsmittel ein erstes abbildendes optisches System aufweisen, durch welches die Objektszene in einem Bildbereich einer Zwischenbildebene abbildbar ist,
(b) die Abbildungsmittel weiterhin ein zweites abbildendes optisches System aufweisen, durch welches der Bildbereich der Zwischenbildebene auf den bildauflösenden Detektor abbildbar ist,
(c) die Pupille des ersten abbildenden Systems in Pupillenbereiche unterteilt ist, wobei in den verschiedenen Pupillenbereichen unterschiedliche Farb- oder Polarisationsfilter angeordnet sind,
(d) in dem Bildbereich ein strahlenablenkendes, mikrooptisches Strahlenablenk-Element angeordnet ist und
(e) das mikrooptische Strahlenablenk-Element so ansteuerbar ist, daß es nacheinander Strahlung aus den verschiedenen Pupillenbereichen auf das zweite abbildende optische System lenkt.

Bei dieser Anordnung bilden die verschiedenen Pupillenbereiche des ersten abbildenden optischen Systems ein und dieselbe Objektszene auf den gemeinsamen Bildbereich ab, im Gegensatz zu der EP 0 905 539 A2. Diese Abbildung erfolgt aber in verschiedenen Spektralbereichen oder verschiedenen Polarisationszuständen. Durch das mikrooptische Strahlablenk-Element kann sehr schnell zwischen den verschiedenen Pupillenbereichen und damit den verschiedenen Spektralbereichen bzw. Polarisationszuständen umgeschaltet werden. Damit lassen sich für jeden Pupillenbereich und damit Spektralbereich oder Polarisationszustand Bildraten im Bereich der Femsehnorm erzielen.

Ein Ausführungsbeispiel der Erfindung ist nachstehend unter Bezugnahme auf die zugehörige Zeichnung näher erläutert.

Die Figur ist eine schematisch-perspektivische Darstellung einer Sensoranordnung für Licht unterschiedlicher Farbe und/oder Polarisation.

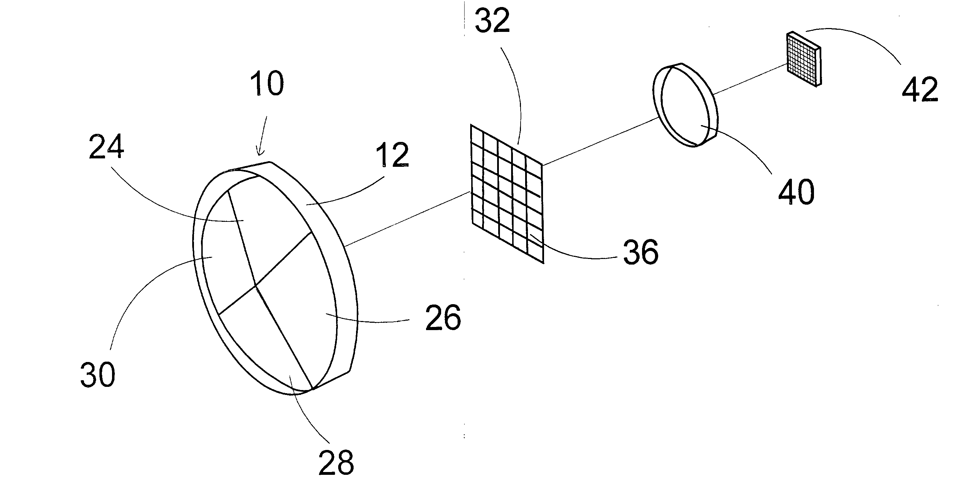

In Fig.1 ist mit 10 ein erstes abbildendes optisches System bezeichnet. Das erste abbildende optische System 10 besteht hier aus einem Objektiv 12. Das Objektiv 12 hat eine Aperturblende oder Pupille. In dieser Aperturblende oder Pupille sind nebeneinander vier Filter angeordnet, die sich jeweils über 90° erstrecken. Diese Filter können Farbfilter sein, die jeweils nur einen bestimmten Spektralbereich durchlassen. Die Filter oder einzelne Filter können auch Polarisationsfilter sein, die nur Licht mit einem bestimmten Polarisatioonszustand durchlassen. Die vier Filter bestimmen vier Pupillenbereiche 24, 26, 28, 30.

Durch alle vier Pupillenbereiche 24, 26, 28, 30 wird eine Objektszene auf einen Bildbereich 32 einer Zwischenbildebene abgebildet. Die Abbildung erfolgt aber dank der Filter in den verschiedenen Spektralbereichen bzw. Polarisationszuständen. In dem Bildbereich 32 erscheint somit z.B. eine Abbildung der Objektszene in einem ersten Spektralbereich, etwa langwelligem Infrarot. Diese Abbildung wird von dem Pupillenbereich 24 erzeugt, vor welchem ein für langwelliges Infrarot durchlässiges Filter angeordnet ist. Überlagert erscheint in dem Bildbereich 32 auch eine Abbildung der Objektszene in einem zweiten Spektralbereich, etwa kurzwelligem Infrarot. Diese Abbildung wird von dem Pupillenbereich 26 erzeugt, vor welchem ein für kurzwelliges Infrarot durchlässiges Filter angeordnet ist. Eine weitere, von dem Pupillenbereich 28 erzeugtes, im Bildbereich 32 überlagertes Bild der Objektszene wird etwa von vertikal polarisiertem Licht erzeugt, wenn vor dem Pupillenbereich 28 ein entsprechendes Polarisationsfilter sitzt. Es können so verschiedene Spektralbereiche auch im sichtbaren und/oder verschiedene Polarisationszustände für die Abbildung verwendet werden.

In dem Bildbereich 32 ist ein strahlenablenkendes, mikrooptisches Strahlablenk-Element 36 angeordnet. Dieses strahlenablenkende, mikrooptische Strahlablenk-Element kann ein mikromechanisches Spiegel-Raster sein. Ein solches Spiegel-Raster besteht aus einem mikromechanisch hergestellten Raster von Spiegel-Elementen 38. Die Spiegel-Elemente 38 können einzeln elektrisch angesteuert und in verschiedenen Richtungen geneigt werden. Sie bleiben aber dabei im wesentlichen in der Bildebene.

In Fig.1 ist der Strahlengang mit einem solchen Strahlenablenk-Element dargestellt, das aus hintereinander im Strahlengang angeordneten, quer zur Strahlenrichtung verschiebbaren, mikrooptischen Linsenrastern besteht. Man kann sich auch mikrooptische Strahlablenk-Elemente etwa nach Art der DE 197 49 799 A1 vorstellen, die in ähnlicher Weise wie das Spiegel-Raster die durchgehenden Strahlen nach Maßgabe elektrischer Signale ablenken.

Ein zweites abbildendes, optisches System 40 in Form eines Objektivs bildet den Bildbereich 32 auf einen bildauflösenden Detektor in Form eines Matrix-Detektors 42 ab.

Die Spiegel-Elemente 38 des mikrooptischen Linsenrasters (oder vergleichbare mikrooptische Elemente) werden nun so angesteuert, daß sie nacheinander nur die Strahlen aus dem Pupillen-Bereich 24, nur die Strahlen aus dem Pupillen-Bereich 26, nur die Strahlen aus dem Pupillen-Bereich 28 oder nur die Strahlen aus dem Pupillen-Bereich 30 auf das zweite abbildende, optische System lenken. Die Strahlen von den verschiedenen Pupillen-Bereichen fallen aus unterschiedlichen Richtungen auf den Bildbereich 32 und damit auf das mikrooptische Strahlablenk-Element 36.

Damit werden von dem Matrix-Detektor 42 mit hoher Auflösung nacheinander die verschiedenen überlagerten Bilder erfaßt. Aus den schnell nacheinander auftretenden Signalen des Matrix-Detektors 42 können praktisch zeitsynchron die Bilder in den verschiedenen Spektralbereichen und Polarisationszuständen gewonnen und ausgewertet werden.

## Patentansprüche

1. Sensoranordnung mit einem bildauflösenden Detektor und Abbildungsmitteln, durch welche eine Objektszene auf den bildauflösenden Detektor abbildbar ist, wobei Filtermittel im Strahlengang vorgesehen sind, durch welche die Abbildung der Objektszene auf dem Detektor nacheinander mit Licht unterschiedlicher Farbe und/oder Polarisation erfolgt, **dadurch gekennzeichnet, daß**
(a) die Abbildungsmittel ein erstes abbildendes optisches System (12) aufweisen, durch welches die Objektszene in einem Bildbereich (32) einer Zwischenbildebene abbildbar ist,
(b) die Abbildungsmittel weiterhin ein zweites abbildendes optisches System (40) aufweisen, durch welches der Bildbereich (32) der Zwischenbildebene auf den bildauflösenden Detektor (42) abbildbar ist,
(c) die Pupille des ersten abbildenden Systems in Pupillenbereiche (24,26,28,30) unterteilt ist, wobei in den verschiedenen Pupillenbereichen (24,26,28,30) unterschiedliche Farb- oder Polarisationsfilter angeordnet sind,
(d) in dem Bildbereich (32) ein strahlenablenkendes, mikrooptisches Strahlenablenk-Element (36) angeordnet ist und
(e) das mikrooptische Strahlenablenk-Element (36) so ansteuerbar ist, daß es nacheinander Strahlung aus den verschiedenen Pupillenbereichen (24,26,28,30) auf das zweite abbildende optische System (40) lenkt.
